# EUROPEAN PATENT SPECIFICATION

(11) **EP 2 168 850 B1**
(45) Date of publication and mention of the grant of the patent: **05.06.2013**
(21) Application number: 09170982.4
(22) Date of filing: 22.09.2009
(51) Int. Cl.: B62J 6/00, B62J 17/02

(54) **Saddle-type vehicle**
Sattelfahrzeug
Véhicule de type à enfourcher

(30) Priority: 30.09.2008 JP 2008255253
(43) Date of publication of application: 31.03.2010
(73) Proprietor: Honda Motor Co., Ltd., Tokyo 107-8556 (JP)
(72) Inventor: Tsuji, Ayumu, Saitama 351-0193 (JP); Mori, Kazuhiko, Saitama 351-0193 (JP); Kitayama, Kyosuke, Saitama 351-0193 (JP); Yano, Kengo, Saitama 351-0193 (JP); Seo, Satoshi, Saitama 351-0193 (JP)
(74) Representative: Ilgart, Jean-Christophe

(56) References cited:
- EP-A- 2 020 370
- US-A1- 2008 158 896

## Description

### [Technical Field]

The present invention relates to a saddle-type vehicle having direction indicators.

### [Background Art]

In the related art, direction indicators provided on a saddle-type vehicle such as a motorcycle or the like are those embedded in a cover (cowl) of a vehicle or mounted outside the cover are known (for example, see Patent Document 1). In Document JP-A-8-192783, an example in which the direction indicators are mounted outside the cover of the motorcycle is disclosed.

### [Disclosure of Invention]

Document EP-A-2020370 (data of publication: 4.2.2009) also discloses a relevant prior art (according to Art. 54(3) EPC).

### [Problems to be Solved by the Invention]

when the direction indicators are arranged outside the cover as in the motorcycles in the related art described above, design flexibility in the interior of the cover is improved. However, since connecting portions of the direction indicators are exposed, improvement of the appearance is a subject to solve.
In contrast, when the direction indicators are embedded in the cover, the appearance is improved, but the specific direction indicators which match the shape of the cover are needed. In addition, since light source units are arranged in the cover, the attainment of the design flexibility in the interior of the cover is a subject to achieve.

Accordingly, it is an object of the present invention to provide a saddle-type vehicle in which the appearance in the peripheries of direction indicators mounted on a cover is improved while attaining design flexibility in the interior of the cover.

### [Means for Solving the Problems]

In order to solve the above-described subjects, the present invention provides a saddle-type vehicle having a front cover configured to cover a front surface of a vehicle, side covers configured to cover left and right sides of the vehicle, and a pair of left and right front direction indicators, characterized in that the side covers are each formed with a groove portion extending in the fore-and-aft direction of the vehicle, the groove portions each include an opening, the front direction indicators are mounted to the openings so as to project outward and wherein the front direction indicators each include a column-shaped stay configured to support a light source unit, the stays are clamped in the groove portions of the side covers, and the light source units project outward from outer surfaces of the side covers.

A configuration in which the side covers each include an upper side cover positioned on the upper side of the groove portion and a lower side cover positioned on the lower side of the groove portion, and the upper side cover and the lower side cover are connected at the groove portion is also applicable.
The front direction indicators each may be supported by an inner cover provided inside the upper side cover and the lower side cover.

### [Advantage of the Invention]

According to the saddle-type vehicle in the present invention, since the front direction indicators are mounted so as to project outward from the side covers, spaces in the interior covered by the front covers and the side covers may be utilized effectively. In addition, since the front direction indictors are mounted in the groove portions on the side covers, mounting portions of the front direction indictors are hardly visible from the outside. Accordingly, the spaces in the interior of the front covers and the side covers are effectively utilized, the design flexibility in the interior of the covers are attained and, simultaneously, the mounting portions of the front direction indictors are prevented from being easily visible from the outside and hence the mounting portions of the front direction indicators are simplified in appearance, so that the appearance in the peripheries of the front direction indictors is improved.

The column-shaped stays configured to support the light source units of the front direction indictors are clamped by the groove portions of the side covers, and the light source units project outward from the outer surfaces of the side covers, so that the stays are prevented from being easily visible and, simultaneously, the visibility of the front direction indictors is attained.
Furthermore, by the provision of the connecting positions between the upper side covers and the lower side covers at the groove portions, the partitioning positions of the side covers are hidden and hence are hardly visible, so that the side covers provide an integral appearance.
Since the front direction indictors are supported by the inner covers, the upper side covers and the lower side covers may be mounted independently from the front direction indictors, so that the assemblability of the side covers is improved.

### [Brief Description of the Drawings]

[Fig. 1] Fig. 1 is a left side view of a saddle-type vehicle according to an embodiment of the present invention.
[Fig. 2] Fig. 2 is a plan view of the saddle-type vehicle.
[Fig. 3] Fig. 3 is a left side view showing the saddle-type vehicle together with a body cover.
[Fig. 4] Fig. 4 is a front view of the saddle-type vehicle.
[Fig. 5] Fig. 5 is a side view of upper side covers and lower side covers.
[Fig. 6] Fig. 6 is a front view of the lower side cover.
[Fig. 7] Fig. 7 is a side view of an upper front lower cover.
[Fig. 8] Fig. 8 is a plan view of a front direction indicator.
[Fig. 9] Fig. 9 is a front view partly in cross section taken along the line A-A in the vicinity of an opening in Fig. 3.
[Fig. 10] Fig. 10 is a cross-sectional view of a portion in the vicinity of a recessed groove portion in Fig. 3 taken along the line B-B.

### [Best Mode for Carrying Out the Invention]

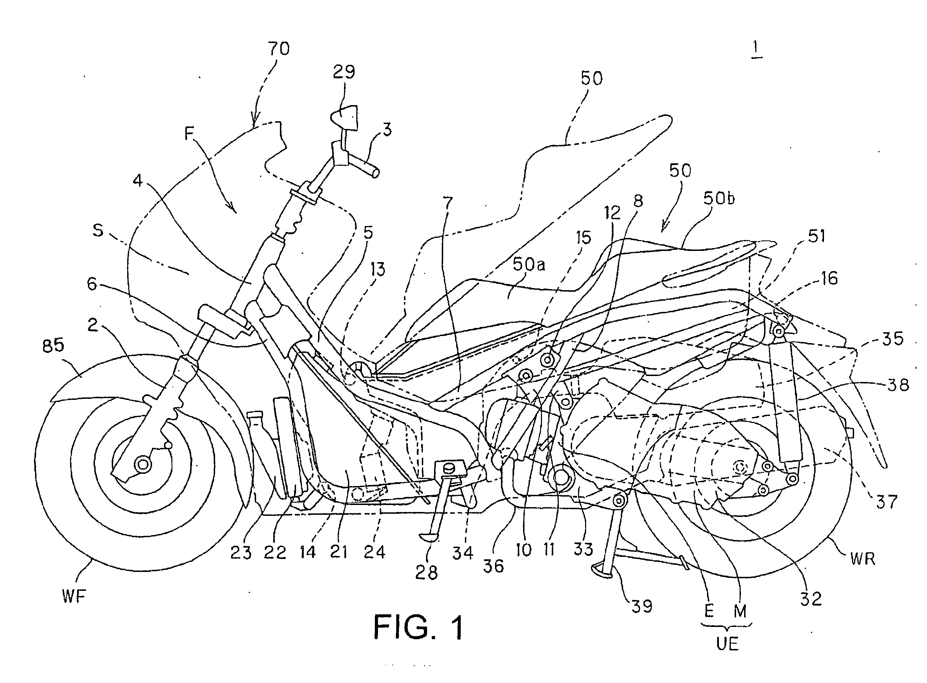

Referring now to the attached drawings, an embodiment of the present invention will be described. Fig. 1 is a left side view of a saddle-type vehicle according to the embodiment of the present invention.
In Fig. 1, for the convenience of description, a body cover 70 is shown by an imaginary line (double-dashed chain line).
A vehicle body frame F of a saddle-type vehicle 1 includes a front fork 2 configured to support a front wheel WF and a head pipe 4 configured to support a steering handle 3 to be joined to the front fork 2 so as to be steered freely at a front end thereof. A unit swing engine UE configured to support a rear wheel WR at a rear end thereof is supported at a midsection in the fore-and-aft direction in terms of the vehicle body frame F so as to be swingable in the vertical direction.
A seat 50 for an occupant is provided above the unit swing engine UE. The vehicle body frame F is further provided with the synthetic resin-made body cover 70 mounted thereon so as to cover the vehicle body frame F.

The vehicle body frame F includes the head pipe 4, a pair of left and right main frames 5 continuing from an upper portion of the head pipe 4 and extending rearward and downward, and a pair of left and right down frames 6 continuing from a lower portion of the head pipe 4, extending rearward and downward, then extending substantially downward and finally extending rearward, and being connected to rear ends of the main frames 5. The vehicle body frame F further includes a pair of left and right seat rails 7 extending from midsections of the both main frames 5 rearward and upward to a rear portion of the vehicle, a pair of left and right middle frames 8 connecting the rear ends of the both main frames 5 and midsections of the seat rails 7.

A fuel tank 21 is arranged in a space surrounded by the left and right main frames 5 and the left and right down frames 6. A first cross member 13 is bridged between the left and right main frames 5 above the fuel tank 21, and a second cross member 14 is bridged between the left and right down frames 6 below the fuel tank 21. A third cross member 15 is bridged between the left and right seat rails 7 above the unit swing engine UE, and a fourth cross member 16 is bridged between the rear ends of the left and right seat rails 7.

A pair of left and right pivot plates 10 are bridged between the seat rails 7 and the middle frames 8. A pivot shaft 12 configured to support the unit swing engine UE so as to be swingable is provided between the left and right pivot plates 10 via a link member 11.

The unit swing engine UE includes a water-cooled engine E having a cylinder axial line extending substantially horizontally, and a belt-type continuously variable transmission M configured to steplessly vary an output from the engine E and transmit the same to the rear wheel WR via a transmission belt and a pulley. The continuously variable transmission M drives a movable pulley on the side of a crankshaft according to the operation of an electric motor (not shown) as an actuator for varying the speed and steplessly varies the change gear ratio. A transmission case 32 of the variable transmission M is formed continuously on the left side of a crank case 33 of the engine E so as to protrude from the engine E, and extends to the left side of the rear wheel WR. An air cleaner unit 35 is connected to an upper portion of the engine E via a throttle body 34, and an exhaust pipe 36 extending rearward of the vehicle is connected to a lower portion of the engine E. A muffler 37 is connected to a rear end of the exhaust pipe 36.

A pair of left and right rear cushion units 38 are provided between both side surface portions of the rear end of the unit swing engine UE and the rear ends of the left and right seat rails 7. As described above, the unit swing engine UE is supported by the pivot shaft 12 and is provided with the rear cushion units 38 at the rear end portion thereof, and hence has a function as a swing arm that swingably supports the rear wheel WR in addition to a function as a power unit.
A main stand 39 is mounted on a lower portion of the unit swing engine UE. A side stand 28 is mounted on the left down frame 6.

A radiator 22 for cooling a coolant of the engine E is provided behind the front wheel WF and in front of the down frames 6, and a reservoir tank 23 for the coolant described above is provided in the vicinity of the radiator 22.
A fuel pump 24 for supplying fuel to the throttle body 34 is provided in the interior of the fuel tank 21.

A storage box 51 which allows storage of a baggage such as a helmet for the occupant is provided between the left and right main frames 5 and between the left and right seat rails 7. The storage box 51 is provided so as to be bridged between the left and right seat rails 7, and extends from above the fuel tank 21 to a position above the unit swing engine UE.
The seat 50 is provided so as to extend along the seat rails 7 above the storage box 51, and includes a front seat portion 50a on which a driver is seated and a rear seat portion 50b on which a passenger is seated. The seat 50 is provided so as to be openable and closable and function as a lid of the storage box 51.

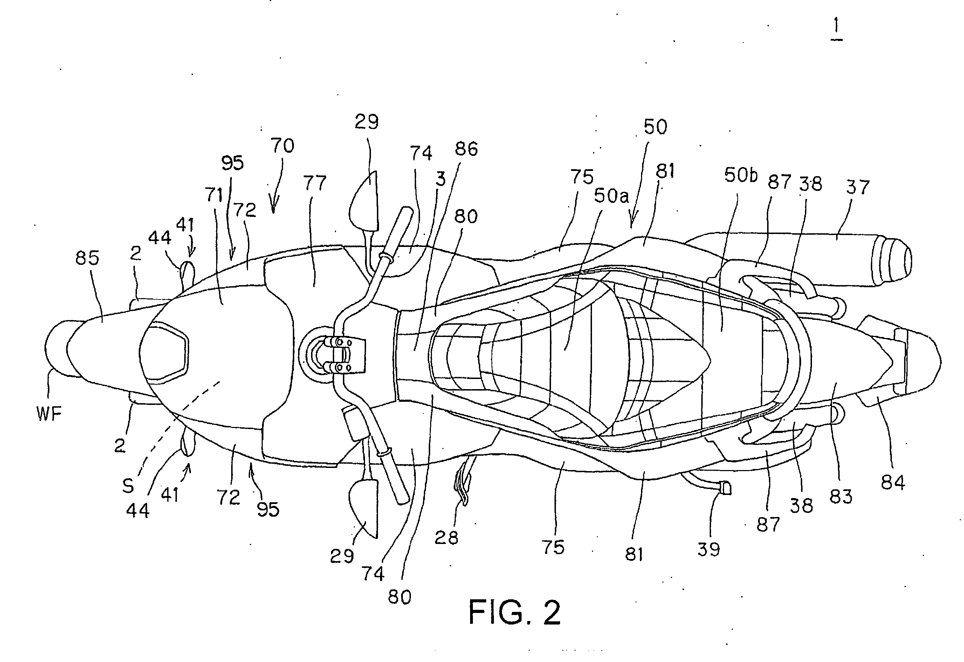

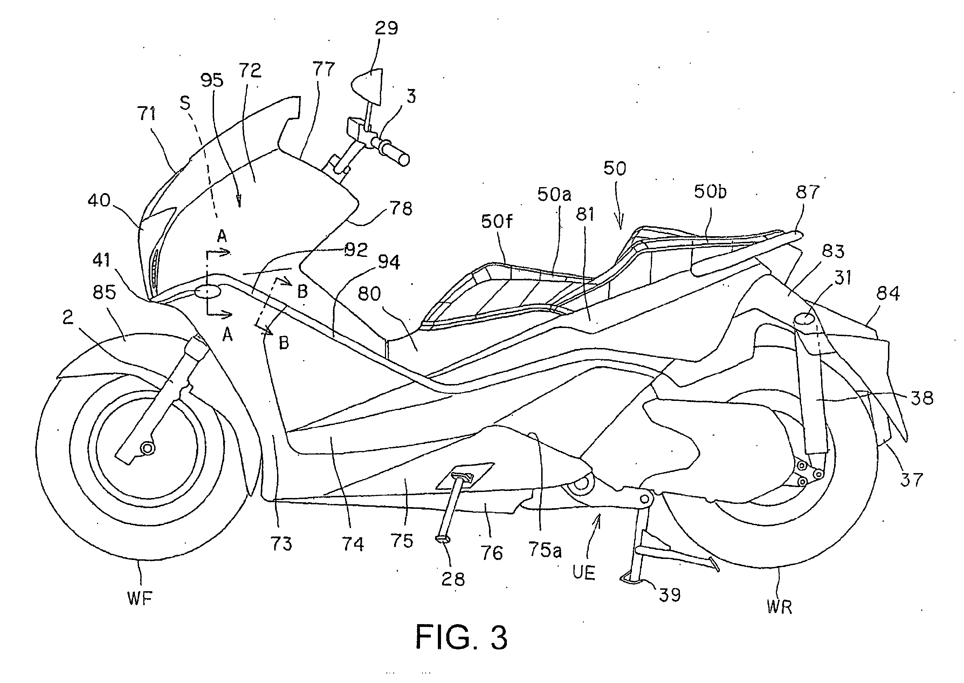

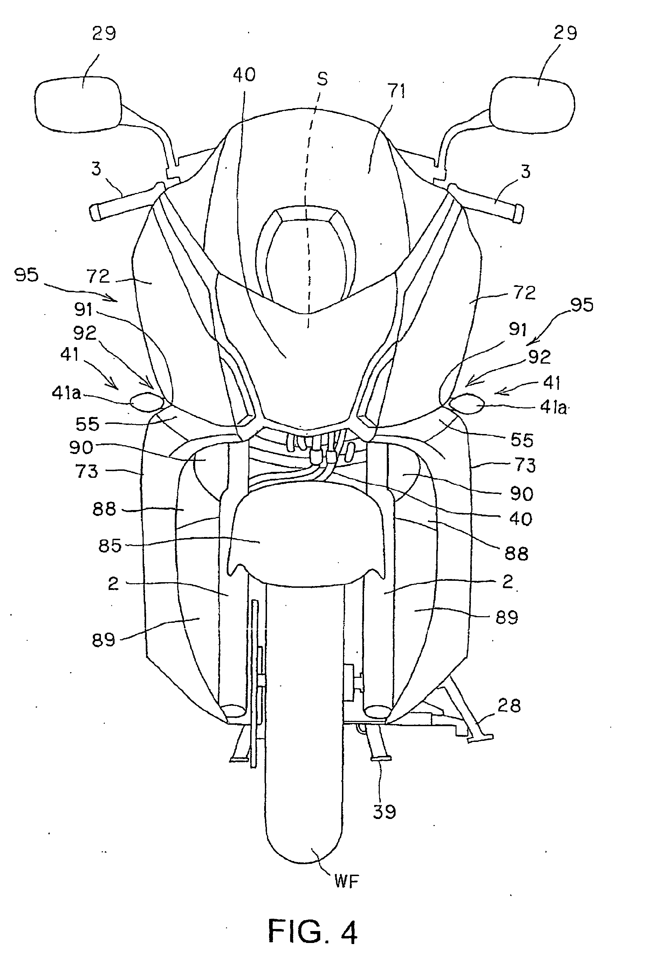

Fig. 2 is a plan view of the saddle-type vehicle 1. Fig. 3 is a left side view showing the saddle-type vehicle 1 together with the body cover 70. Fig. 4 is a front view of the saddle-type vehicle 1.
The body cover 70 includes a front cover 71 configured to cover a front surface of the saddle-type vehicle 1 in front of the head pipe 4, a pair of left and right upper side covers (side covers) 72 joined to both left and right sides of the front cover 71 and configured to cover lateral sides of a front portion of the vehicle, a pair of left and right lower side covers (side covers) 73 joined to lower portions of the upper side covers 72 and configured to cover a lower portion of the front portion of the vehicle and to cover the forward of the leg portions of the driver seated on the front seat portion 50a to serve also as a leg shield, a pair of left and right floor steps 74 being joined to the upper side covers 72 and the lower side covers 73 and extending rearward for covering the forward of the leg portions of the driver seated on the front seat portion 50a, a pair of left and right floor skirts 75 joined to lower portions of the floor steps 74, and an undercover 76 configured to cover a lower surface of a center of the vehicle. A pair of left and right side covers 95 which cover the lateral sides of the front portion of the vehicle each include the upper side cover 72 and the lower side cover 73. A pair of left and right upper front lower covers 88 (inner cover) and a pair of left and right lower front lower covers 89 which cover the radiator 22 from the front are provided inside the left and right side covers 95 respectively. The body cover 70 includes a meter panel cover 77 configured to cover the head pipe 4 from above and an inner cover 78 configured to be joined to the left and right upper side covers 72 so as to cover the head pipe 4 from behind. A pair of left and right tandem steps 75a for allowing the passenger seated on the rear seat portion 50b to place his or her feet thereon are provided at a rear portion of the floor skirts 75.

The body cover 70 includes a pair of left and right seat lower covers 80 provided below the front seat portion 50a, a seat hinge cover 86 provided between the left and right seat lower covers 80, a pair of left and right body covers 81 extending along the seat rails 7 to cover lateral surfaces of the vehicle, a rear body cover 82 joined to a rear end of the body covers 81 for covering the rear portion of the vehicle, and a body cover skirt 83 extending rearward and downward from the rear end of the body covers 81. A rear fender 84 configured to cover the rear wheel WR from behind is mounted on an end of the body cover skirt 83. A pair of left and right grab rails 87 are mounted below the rear seat portion 50b. The passenger seated on the rear seat portion 50b is able to support his or her body by grabbing the grab rails 87.

A front fender 85 configured to cover the front wheel WF from above is fixed to the front fork 2. The steering handle 3 is provided with a pair of left and right back mirrors 29 or a switch case (not shown) for operating a light unit or the like. A headlight unit 40 is provided in front of the front cover 71, and and a pair of left and right front direction indicators 41 are provided on the lower side covers 73 positioned rearward of the headlight unit 40. A pair of left and right rear direction indicators 31 are provided on the body cover skirt 83.
The saddle-type vehicle 1 here is a scooter type vehicle having a seat 50 which allows the occupant to straddle, low floor portions which allow the occupant to place his or her feet such as the floor steps 74, and the unit swing engine UE.

As shown in Fig. 4, the front cover 71 is provided on the front surface of the front potion of the vehicle, and the headlight unit 40 is provided at a center on a lower portion thereof. The left and right upper side covers 72 are connected to left and right ends of the front cover 71 and extend rearward respectively, and the headlight unit 40 is protruded in an in-cover space S defined by being surrounded by the front cover 71 and the left and right upper side covers 72, and accommodates cables (not shown) of electrical parts or the like and a brake hose 30 or the like extending from a position in the vicinity of the steering handle 3 are stored therein. As shown in Fig. 2, when viewing the vehicle from above, the front portion of the vehicle formed by the front cover 71 and the left and right upper side covers 72 is formed into a forwardly protruded convex curved surface, and is increased gradually in width from a front end of the front cover 71 toward rear ends of the upper side covers 72.

As shown in Fig. 4, the lower side covers 73 are connected to the lower portions of the upper side covers 72, and the left and right lateral sides of the front portion of the vehicle are covered by the upper side covers 72 and the lower side covers 73. The upper side covers 72 and the lower side covers 73 are joined at mating portions 91 positioned at substantially center portions in the vertical direction of the vehicle, and in front view, the left and right front direction indicators 41 are provided so as to project outward of the vehicle from the portions in the vicinity of the mating portions 91. In the vicinity of the mating portions 91, recessed groove portions (groove portions) 92 depressed inward of the vehicle are formed.

The upper front lower covers 88 are connected to upper portions of the lower side covers 73 inward of the vehicle, and the lower front lower covers 89 are provided below the upper front lower covers 88. The upper front lower covers 88 each have a vent hole 90, and air entered from the vent holes 90 is supplied to the radiator 22.

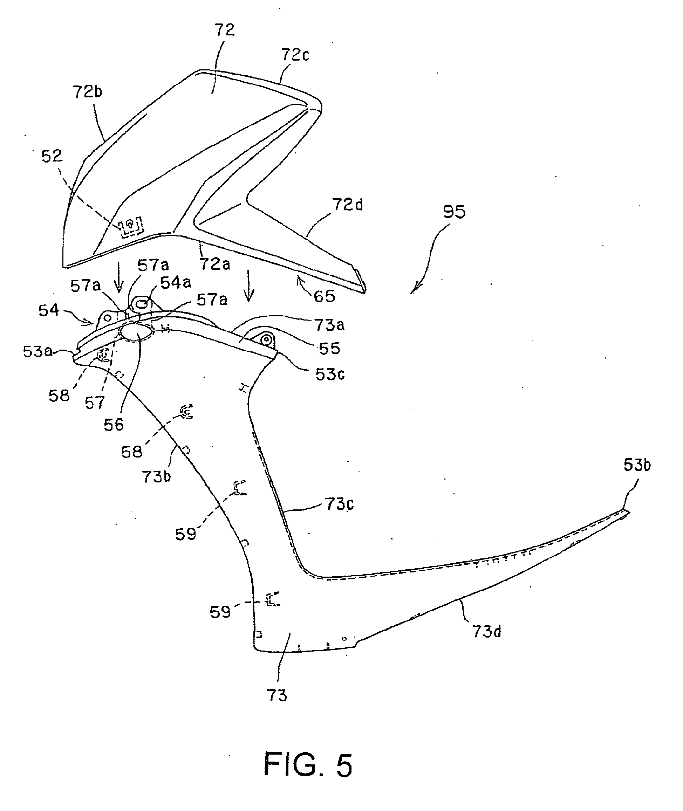

Fig. 5 is a side view of the upper side cover 72 and the lower side cover 73.
The side covers 95 each include the upper side cover 72 and the lower side cover 73. The upper side cover 72 includes a lower side cover connecting portion 72a to be connected to the lower side cover 73, a front cover connecting portion 72b to be connected to the front cover 71, a meter panel cover connecting portion 72c to be connected to the meter panel cover 77, and an inner cover connecting portion 72d to be connected to the inner cover 78. The lower side cover connecting portion 72a is formed at a lower edge portion of the upper side cover 72 and extends from the front side rearward and upward, and then extends rearward and downward. The upper side cover 72 includes a projection 52 configured to engage the lower side cover 73 formed on the inner side thereof in the vicinity of the lower side cover connecting portion 72a.

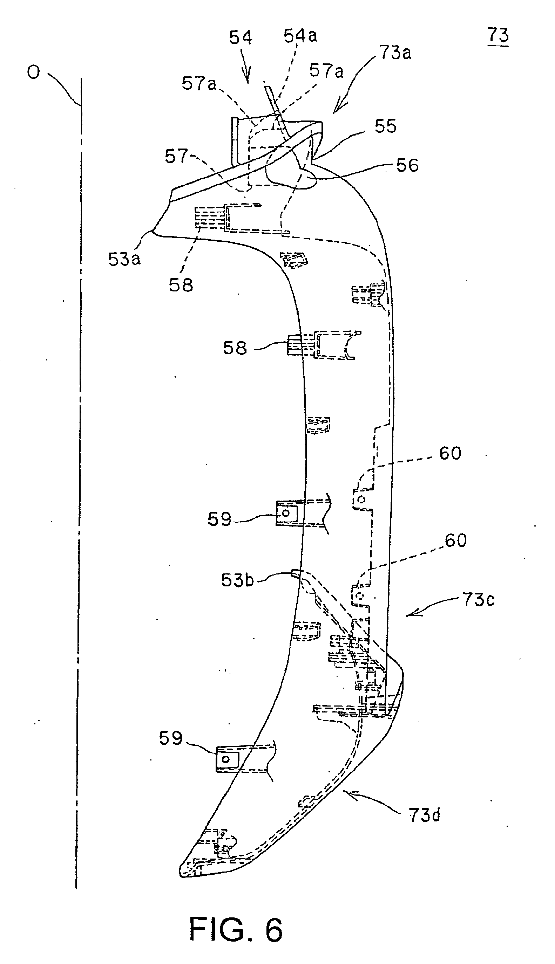

Fig. 6 is a front view of the lower side cover 73. Here, Fig. 6 shows the left lower side cover 73, and the right lower side cover 73 is arranged in lateral symmetry with reference to a centerline O in the drawing.
As shown in Fig. 5 and Fig. 6, the lower side cover 73 is formed into a curved surface curved so as to protrude widthwise of the vehicle, and is increased in width from a front end portion 53a on the front side of the vehicle toward the rear, and is decreased gradually in width from a portion in the vicinity of the midsection in the fore-and-aft direction toward a rear end portion 53b. The lower side cover 73 includes an upper side cover connecting portion 73a to be connected to the upper side cover 72, a front lower cover connecting portion 73b to be connected to the upper front lower cover 88 and the lower front lower cover 89, a floor step connecting portion 73c to be connected to the floor step 74, and a floor skirt connecting portion 73d to be connected to the floor skirt 75. The upper side cover connecting portion 73a is formed into a shape corresponding to the lower side cover connecting portion 72a, and extends from the front side rearward and upward, and then extends rearward and downward at an upper edge portion of the lower side cover 73.

A joint panel portion 54 projecting inward of the lower side cover 73 is formed at the upper edge portion of the lower side cover 73. The joint panel portion 54 is formed with an engaging hole 54a which engages the projection 52 of the upper side cover 72.
On the upper edge portion of the lower side cover 73, an indentation (groove portion) 55 indented inward of the vehicle is formed. The indentation 55 extends from the front end portion 53a to a rear end portion 53c of the upper side cover connecting portion 73a continuously in the fore-and-aft direction of the vehicle. The indentation 55 is formed with an opening 56 for mounting the front direction indictor 41. The opening 56 is formed into a substantially oval shape in side view and is positioned below the joint panel portion 54. The opening 56 is formed with a cylindrical holding portion 57 extending inward of the vehicle from a peripheral edge portion of the substantially oval shape. The holding portion 57 is formed with ribs 57a extending in the vertical direction on the upper portion of the holding portion 57 at three positions to attain the strength of the holding portion 57.

Formed below the opening 56 and inside the lower side cover 73 are two joint portions 58 to be connected to the upper front lower cover 88.
Formed below the joint portion 58 are a plurality of joint portions 59 to be joined with the lower front lower cover 89. The floor step connecting portion 73c is formed with a plurality of joint portions 60 to be joined with the floor step 74.

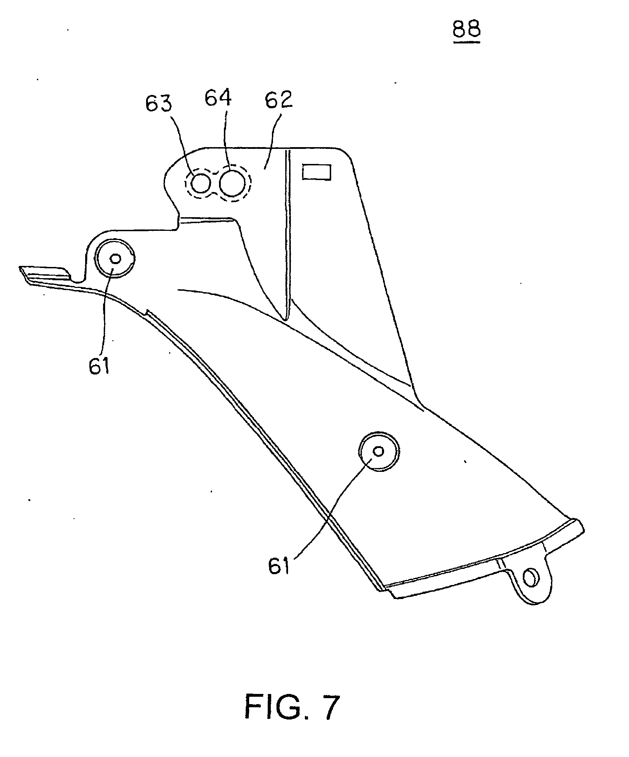

Fig. 7 is a side view of the upper front lower cover 88 on the left side. The upper front lower cover 88 on the right side is formed in lateral symmetry with the upper front lower cover 88 on the left side.
The upper front lower cover 88 includes two joint portions 61 to be joined to the joint portions 58 formed on the lower side cover 73 at the two positions. A direction indicator receiving portion 62 for receiving the front direction indicator 41 is provided on an upper portion of the upper front lower cover 88. The direction indicator receiving portion 62 formed into a flat shape is formed with a fixing hole 63 for fixing the front direction indicator 41 and a positioning hole 64 for positioning the front direction indicator 41. The lower side cover 73 is configured in such a manner that the fixing hole 63 and the positioning hole 64 are exposed from the opening 56 shown in Fig. 5 in a state in which the joint portion 58 and the joint portion 61 are joined and the upper front lower cover 88 is joined to the lower side cover 73.

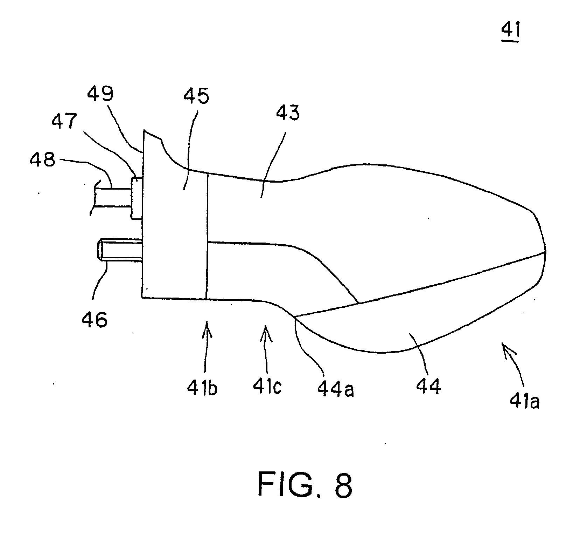

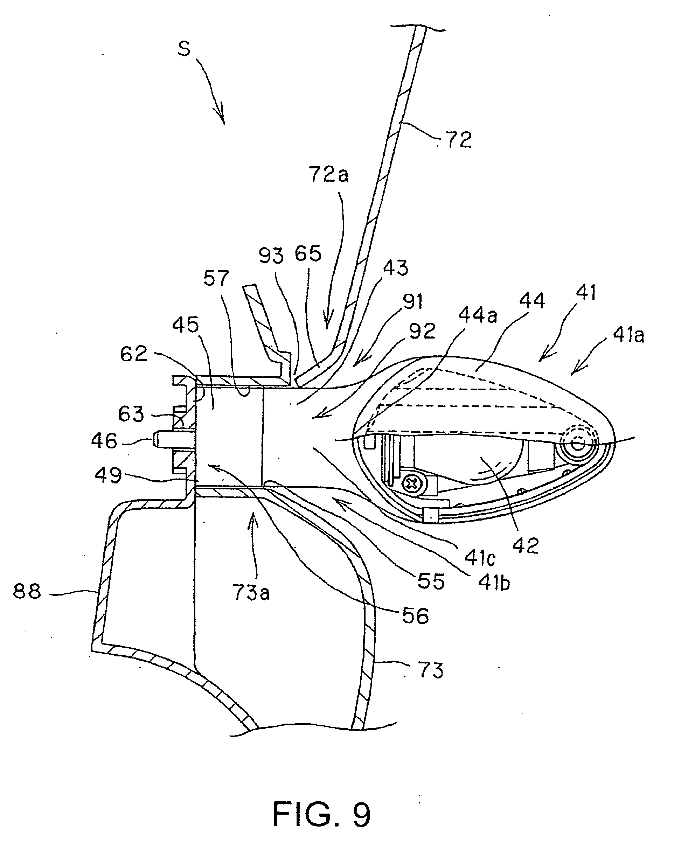

Fig. 8 is a plan view of the front direction indicator 41. Fig. 9 is a front view partly in cross section taken along the line A-A in the vicinity of the opening 56 in Fig. 3.
The front direction indicator 41 includes a light source unit 41a which has a light source and emits light and a supporting unit 41b including a column-shaped stay 45 which supports the light source unit 41a. The light source unit 41a includes a bulb 42 as a light source for emitting light, and a direction indicator lens 44 configured to cover a front surface of the bulb 42. The supporting unit 41b includes a base 43 to which the bulb 42 is attached, and the stay 45 for supporting the base 43.
The stay 45 is provided with a bolt 46 projecting inward of the vehicle and a positioning projection 47 positioned rearward of the vehicle adjacent to the bolt 46. The positioning projection 47 is formed with a hole (not shown), and a cable 48 which supplies electric power to the front direction indicator 41 is connected via the hole. The cable 48 is stored in the in-cover space S. A bottom portion 49 of the stay 45 provided with the positioning projection 47 is formed into a substantially oval shape which is substantially the same shape as the opening 56 in side view.

The base 43 is mounted on the stay 45 in the direction projecting outward of the vehicle, and the direction indicator lens 44 covers the bulb 42 mounted on the base 43. The front direction indicator 41 is mounted in the direction in which the direction indicator lens 44 faces forward of the vehicle, and the direction indicator lens 44 is formed of a transparent orange lens.

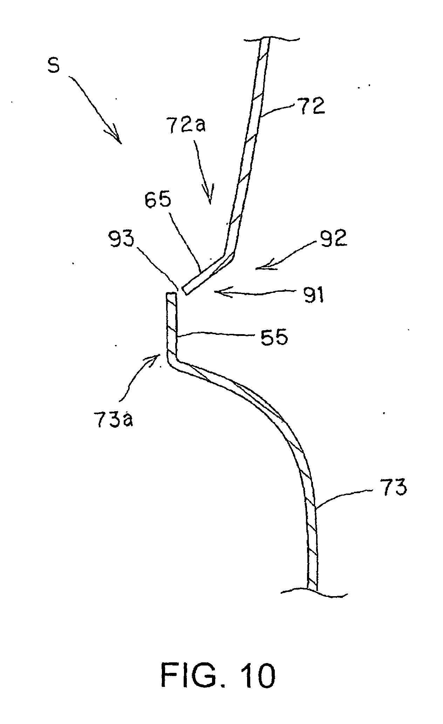

Fig. 10 is a cross-sectional view of a portion in the vicinity of the recessed groove portion 92 in Fig. 3 taken along the line B-B.
As shown in Fig. 9 and Fig. 10, an inwardly inclining portion 65 bent inward of the vehicle is formed at a lower edge portion of the upper side cover 72 at the mating portion 91. The inwardly inclining portion 65 extends in the fore-and-aft direction of the vehicle over the entire length of the lower edge portion of the upper side cover 72. As described above, the indentation 55 of the lower side cover 73 extends in the fore-and-aft direction of the vehicle along the upper side cover connecting portion 73a.

Then, the inwardly inclining portion 65 is positioned immediately above the indentation 55 at the mating portion 91 between the upper side cover 72 and the lower side cover 73, and the indentation 55 and the inwardly inclining portion 65 are provided so as to continue, whereby the recessed groove portion 92 is formed. The recessed groove portion 92 extends in the fore-and-aft direction of the vehicle and is formed continuously corresponding to a range from the front end portion 53a to the rear end portion 53c of the lower side cover 73. The mating portion 91 is formed continuously in the fore-and-aft direction of the vehicle in the recessed groove portion 92.

At the mating portion 91, an end of the inwardly inclining portion 65 and an end of the lower side cover 73 do not come into contact with each other and are slightly apart from each other thereby defining a clearance 93. Accordingly, the upper side cover 72 and the lower side cover 73 are not necessary to be brought into abutment with each other with a high degree of accuracy at the mating portion 91, so that the control of dimensional accuracies of components and of an assembly accuracy is easy.
In addition, the mating portion 91 is formed inside the recessed groove portion 92, and hence the mating portion 91 is hidden in the recessed groove portion 92 and is hardly visible from the outside of the vehicle, so that the upper side cover 72 and the lower side cover 73 are provided with an integral appearance.

As shown in Fig. 9, the direction indicator receiving portion 62 of the upper front lower cover 88 comes into abutment with a widthwise end of the holding portion 57 provided at the opening 56 of the lower side cover 73, and the direction indicator receiving portion 62 closes the opening 56 from the inside of the vehicle. Then, the front direction indicator 41 is mounted in a state in which the supporting unit 41b is fitted to the holding portion 57 of the opening 56, and the bottom portion 49 abuts against the direction indicator receiving portion 62. The front direction indicator 41 is fixed by the positioning projection 47 being fitted to the positioning hole 64 (Fig. 7) of the direction indicator receiving portion 62 and positioned and the bolt 46 being inserted into and fixed to the fixing hole 63. In other words, the front direction indicator 41 is provided at the opening 56, and is supported by the upper front lower cover 88.

In this manner, the front direction indicators 41 are mounted into the openings 56 provided at the recessed groove portions 92, and a mounting units 41c as portions positioned inward of the vehicle with respect to inner end portions 44a of the direction indicator lenses 44 at the supporting units 41b of the front direction indicators 41 are accommodated in the recessed groove portions 92. Accordingly, the mounting units 41c including the stays 45 are clamped in the recessed groove portions 92, so that the mounting units 41c are hardly visible from the outside of the vehicle.
The light source units 41a are disposed so as to project outward from outer surfaces of the lower side covers 73 via the supporting units 41b extending in a column shape, and are disposed at a distance outward from the headlight units 40 shown in Fig. 3, so that the light source units 41a are visible clearly from the outside, and the visibility of the front direction indicators 41 are improved.
In addition, the recessed groove portions 92 are depressed inward of the vehicle body, and water can hardly enter into the inside thereof, whereby entry of water into the inside of the vehicle body from the portions where the front direction indicators 41 are mounted is prevented.
Also, the front direction indicators 41 are mounted in a state of being abutted against the direction indicator receiving portions 62, and are not configured specifically to be mounted to mounting portions having a curved surface shape. Therefore, the front direction indicators 41 may be of multipurpose direction indicators, so that reduction of the cost is achieved.

As shown in Fig. 3, in the body cover 70, grooves 94 is formed between lower edge portions of a rear portion of the upper side covers 72, the seat lower covers 80, and the body covers 81 and upper edge portions of the floor steps 74. The grooves 94 are formed continuously from rear ends of the recessed groove portions 92 and extend continuously to rear portions of the body covers 81 in side view. Part of wind flowing around the body cover 70 during travel of the saddle-type vehicle 1 is rectified so as to pass through the recessed groove portions 92 and the grooves 94. Then, part of the wind flowing on the front portion of the vehicle is rectified to flow along the recessed groove portions 92 and flows rearward of the vehicle as is from ends of the recessed groove portions 92. Accordingly, the wind can hardly impinge on the occupant seated inside the vehicle, so that the traveling wind flowing toward the occupant is reduced.

As described thus far, according to the embodiment to which the present invention is applied, since the front direction indicators 41 are mounted so as to project outward from the upper side covers 72 and the lower side covers 73, the in-cover space S can be utilized effectively by an extent corresponding to the extent that the front direction indicators 41 do not project inward of the vehicle. Furthermore, since the front direction indicators 41 are mounted in the recessed groove portions 92, the mounting units 41c of the front direction indicators 41 are hardly visible from the outside. Accordingly, the in-cover spaces S are effectively utilized, the design flexibility in the interior of the in-cover spaces S is attained, the mounting portions of the front direction indictors 41 are prevented from being easily visible from the outside and hence the mounting portions of the front direction indicator 41 are simplified in appearance, so that the appearance in the peripheries of the front direction indictors 41 is improved.

The column-shaped stays 45 configured to support the light source units 41a of the front direction indictors 41 are clamped by the recessed groove portions 92, and the light source units 41a project outward from the outer surfaces of the lower side covers 73, so that the stays 45 are prevented from being easily visible from outside and, simultaneously, the visibility of the front direction indictors 41 is attained.
In addition, by the provision of the connecting positions between the upper side covers 72 and the lower side covers 73 at the recessed groove portions 92, the partitioning portions of the upper side covers 72 and the lower side covers 73 are hidden and hence are hardly visible, so that the upper side cover 72 and the lower side cover 73 provide an integral appearance, and the appearance is improved.
Since the front direction indicators 41 are supported by the upper front lower covers 88 inside the side covers 95, the upper side covers 72 and the lower side covers 73 are mounted independently from the front direction indicators 41, so that the assemblability of the side covers 95 is improved. For example, when assembling the lower side covers 73 to the vehicle, it is not necessary to assemble the lower side covers 73 together with the front direction indicators 41, and hence the assembly is easy. In this case, the front direction indicators 41 may be assembled from the openings 56 easily after having assembled the lower side covers 73.

The embodiment described above is a mode in which the present invention is applied, and the present invention is not limited to the embodiment described above.
For example, although the front direction indicators 41 are described to be mounted in the openings 56 of the recessed groove portions 92 formed at the mating portions 91 formed respectively between the upper side covers 72 and the lower side covers 73 in the embodiment described above, the present invention is not limited thereto. For example, a configuration in which the recessed groove portions are provided respectively on the body cover skirts 83 on the rear portions of the vehicle, and the rear direction indicators 31 are mounted in openings formed at the recessed groove portions is also applicable. Although the upper side cover 72 and the lower side cover 73 are described to be joined respectively in the embodiment described above, the present invention is not limited thereto and, for example, a configuration in which recessed groove portions and openings are provided on the side covers which are integrally composed of the upper side cover 72 and the lower side cover 73 and the front direction indicators 41 are mounted in the openings is also applicable.
Although the saddle-type vehicle 1 are described to be a scooter type vehicle, the present invention is not limited thereto and, for example, the saddle-type vehicle 1 may be motorcycles such as road sport vehicles or dual purpose vehicles or, alternatively vehicles having three wheels, or four wheels or more wheels. Other detailed configurations may be modified arbitrarily as a matter of course.

### [Description of the Reference Numerals and Signs]

1: saddle-type vehicle
5: main frame
40: headlight unit
41: front direction indicator
41a: light source unit
41b: supporting unit
41c: mounting unit
45: stay
55: indentation (groove portion)
56: opening
62: direction indicator receiving portion
65: inwardly inclining portion
71: front cover
72: upper side cover (side cover)
73: lower side cover (side cover)
88: upper front lower cover (inner cover)
91: mating portion
92: groove portion (groove portion)
95: side cover
S: in-cover space

## Claims

1. A saddle-type vehicle (1) comprising:
a front cover (71) configured to cover a front surface of a vehicle; side covers (72,73) configured to cover left and right sides of the vehicle, and a pair of left and right front direction indicators (41),
wherein the side covers (72,73) are each formed with a groove portion (55) extending in the fore-and-aft direction of the vehicle, the groove portions each include an opening (56), the front direction indicators (41) are mounted to the openings so as to project outward and wherein the front direction indicators (41) each include a column-shaped stay (45) configured to support a light source unit (41a), the stays are clamped in the groove portions of the side covers, and the light source units (41a) project outward from outer surfaces of the side covers (72,73).

2. The saddle-type vehicle according to Claim 1, wherein the side covers (72,73) each include an upper side cover (72) positioned on the upper side of the groove portion (92) and a lower side cover (73) positioned on the lower side of the groove portion (92), and the upper side cover (72) and the lower side cover (73) are connected at the groove portion.

3. The saddle-type vehicle according to Claim 2, wherein the front direction indicators (41) each are supported by an inner cover provided inside the upper side cover (72) and the lower side cover (73).

## Patentansprüche

1. Sattelfahrzeug (1), das aufweist:
eine Frontabdeckung (71), die aufgebaut ist, um eine vordere Oberfläche eines Fahrzeugs zu bedecken; Seitenabdeckungen (72, 73), die aufgebaut sind, um linke und rechte Seiten des Fahrzeugs zu bedecken, und ein Paar linker und rechter vorderer Fahrtrichtungsanzeiger (41),
wobei die Seitenabdeckungen (72, 73) jeweils mit einem Nutabschnitt (55) ausgebildet sind, der sich in der Vom-Hintenrichtung des Fahrzeugs erstreckt,
wobei die Nutabschnitte jeweils eine Öffnung (56) umfassen, wobei die vorderen Fahrtrichtungsanzeiger (41) derart an die Öffnungen montiert sind,
dass sie nach außen vorstehen, und wobei die vorderen Richtungsanzeiger (41) jeweils eine säulenförmige Strebe (45) umfassen, die aufgebaut sind eine Lichtquelleneinheit (41a) zu halten, wobei die Streben in die Nutabschnitte der Seitenabdeckungen geklemmt sind und die Lichtquelleneinheiten (41a) von Außenoberflächen der Seitenabdeckungen (72, 73) nach außen vorstehen.

2. Sattelfahrzeug nach Anspruch 1, wobei die Seitenabdeckungen (73, 73) jeweils eine obere Seitenabdeckung (72), die auf der Oberseite des Nutabschnitts (92) positioniert ist, und eine untere Seitenabdeckung (73), die auf der Unterseite des Nutabschnitts (92) positioniert ist, umfassen, und wobei die obere Seitenabdeckung (72) und die untere Seitenabdeckung (73) an dem Nutabschnitt verbunden sind.

3. Sattelfahrzeug nach Anspruch 2, wobei die vorderen Fahrtrichtungsanzeiger (41) jeweils von einer Innenabdeckung gehalten werden, die im Inneren der oberen Seitenabdeckung (72) und der unteren Seitenabdeckung (73) bereitgestellt ist.

## Revendications

1. Véhicule de type à selle (1) comprenant :
un capot avant (71) configuré pour recouvrir une surface avant d'un véhicule ; des capots latéraux (72, 73) configurés pour recouvrir les côtés gauche et droit du véhicule, et une paire d'indicateurs de direction avant gauche et droit (41),
dans lequel les capots latéraux (72, 73) sont formés chacun avec une partie de rainure (55) s'étendant dans la direction longitudinale du véhicule, les parties de rainure comprennent chacune une ouverture (56), les indicateurs de direction avant (41) sont montés sur les ouvertures de manière à faire saillie à l'extérieur, et dans lequel les indicateurs de direction avant (41) comprennent chacun un étai en forme de colonne (45) configuré pour supporter une unité de source de lumière (41a), les étais sont serrés dans les parties de rainure des capots latéraux, et les unités de source de lumière (41a) font saillie à l'extérieur des surfaces extérieures des capots latéraux (72, 73).

2. Véhicule de type à selle selon la revendication 1, dans lequel les capots latéraux (72, 73) comprennent chacun un capot latéral supérieur (72) positionné du côté supérieur de la partie de rainure (92) et un capot latéral inférieur (73) positionné du côté inférieur de la partie de rainure (92), et le capot latéral supérieur (72) et le capot latéral inférieur (73) sont reliés au niveau de la partie de rainure.

3. Véhicule de type à selle selon la revendication 2, dans lequel les indicateurs de direction avant (41) sont supportés chacun par un capot intérieur prévu à l'intérieur du capot latéral supérieur (72) et du capot latéral inférieur (73).
